# NEUE EUROPÄISCHE PATENTSCHRIFT

(11) **EP 0 385 465 B2**
(45) Veröffentlichungstag und Bekanntmachung des Hinweises auf die Entscheidung über den Einspruch: **16.06.1999**
(45) Hinweis auf die Patenterteilung: 26.10.1994
(21) Anmeldenummer: 90103991.7
(22) Anmeldetag: 01.03.1990
(51) Int. Cl.: F16L 11/11, F16L 9/06

(54) **Verfahren zur Herstellung eines Abwasserrohrs aus Kunststoff**
Method of making a plastic sewer
Procédé de fabrication d'un égout en matière plastique

(30) Priorität: 03.03.1989 DE 3906752; 25.11.1989 DE 3939052
(43) Veröffentlichungstag der Anmeldung: 05.09.1990
(73) Patentinhaber: Pipelife Rohrsysteme GmbH, 26149 Bad Zwischenahn (DE)
(72) Erfinder: Hetzenecker, Heinz, D-2903 Bad Zwischenahn (DE); Meyer, Wolfgang, D-2903 Bad Zwischenahn (DE); Othold, Rolf, D-2900 Oldenburg (DE)
(74) Vertreter: Patentanwälte Hauck, Graalfs, Wehnert, Döring, Siemons

(56) Entgegenhaltungen:
- EP-A- 0 211 428
- DE-A- 2 042 031
- DE-A- 2 820 830
- DE-A- 3 605 329
- DE-A- 3 701 822
- DE-C- 2 637 995
- DE-U- 1 909 468
- DE-U- 8 234 897
- FR-A- 2 165 620
- FR-A- 2 533 996
- JP-A- 61 148 035
- US-A- 2 898 941
- US-A- 3 838 713
- Prospekt SIROPLAST, Fa. Hegler, 1987
- Prospekt SIROPLAN, Fa. Hegler, 1987
- Prospekt HP-KANALROHRE, Fa. Hegler, 1981

## Beschreibung

Die Erfindung bezieht sich auf ein Verfahren zur Herstellung eines Leitungsrohres aus Kunststoff, insbesondere für Abwässer, nach dem Oberbegriff des Anspruches 1.

Es ist seit längerem bekannt, Leitungsrohre aus Kunststoff herzustellen. Kunststoffrohre weisen eine Reihe von Vorteilen auf. Sie sind korrosionsbeständig und besitzen ein geringes Gewicht, was ihre Verlegung erleichtert und ihre Herstellung verbilligt. Ein Nachteil ist jedoch die begrenzte Rohrsteifigkeit bei glattwandigen Rohren. Man ist daher dazu übergegangen, Kunststoffrohre mit gewellter oder gerippter Wandform auszubilden. Diese Form ist besonders druckstabil. Je nach Höhe der Wellenberge bzw. dem Verhältnis von Wellenbergen zu -tälern kann dabei die Drucksteifigkeit unterschiedlich eingestellt werden. Ein Nachteil derartiger Rohre liegt jedoch darin, daß das Strömungsverhalten gewellter Rohre ungünstig ist. Aus diesem Grund sind Doppelrohre konzipiert worden, die aus einem gewellten Außenrohr und einem glatten Innenrohr bestehen. Ein solches Doppelrohr beschreibt das DE-GM 82 34 897. Danach werten beide Rohre separat hergestellt. Anschliessend wird das Innenrohr in das Außenrohr eingeschoben. Theoretisch könnte das Innenrohr mit sehr geringer Wandstärke ausgebildet werden, da es nur schwachem Druck standhalten muß. Während des Hineinschiebens in das Außenrohr muß jedoch ein relativ großer Widerstand überwunden werden. Die Wand des Innenrohrs muß daher eine gewisse Steifigkeit aufweisen. Die bekannten Doppelrohre erhalten dadurch ein relativ hohes Gewicht. Darüber hinaus lassen sich ihre Maße normalerweise nicht an die Standardabmessungen (Normen) anpassen, wodurch ein Anschluß an standardrohre, z.B. Steinzeugrohre, nicht möglich ist. Nachteilig bei den bekannten Rohren ist ferner, daß zu Verbindungszwecken Hülsen auf die glatten Enden der Innenrohre aufgeschoben werden, damit sie mit den Muffen von Standardrohren verbunden werden können.

Es ist weiterhin bekannt, Doppelrohre mit einem gewellten Außenrohr und einem glatten Innenrohr durch "Koextrusion" herzustellen. Dabei wird zunächst das Außenrohr glatt extrudiert und dann gewellt, wobei gleichzeitig das Innen-rohr innerhalb des Außenrohres extrudiert wird. Da beide Rohre noch warm sind, verbinden sich die Täler des Außenrohres mit dem Innenrohr, was dem Doppelrohr eine besondere Druckfestigkeit verleiht. Ein Verfahren zur Herstellung koextrudierter Doppelrohre beschreibt die DE-AS 26 37 995. Über die Verbindung dieser Rohre mit Nachbarrohren ist in der Druckschrift nichts gesagt. Allgemein besteht ein Nachteil der bislang bekannten, koextrudierten Leitungsrohre darin, daß sie keine Standardmaße aufweisen. Ihre Verlegung in Verbindung mit herkömmlichen Rohren ist daher schwierig, wenn nicht unmöglich, falls aufwendige Adapter vermieden werden sollen.

Die EP-A-0 211 428 offenbart ebenfalls ein Leitungsrohr mit einem glatten Innenraum und einem damit verbundenen gewellten Außenrohr. Das Leitungsrohr ist über Muffenverbindungen mit einem gleichen Rohr verbindbar. Die Muffen können als besonderes Hülsenteil zum Einstecken benachbarter Leitungsrohre ausgebildet sein. Dann werden die Endlos rohre mit endloser Wellung hergestellt und in Rohrstücke zerteilt. Das Leitungsrohr kann aber auch in einem Endbereich zu einer Rohrmuffe arfgeweitet sein, die über einen muffenlosen Endbereich eines Nachbarrohres geschoben wird. Somit übersteigt der Innendurchmesser der Muffe den Außendurchmesser des angrenzenden Rohres, so daß die Nachbarrohre nicht durch Zerschneiden eines endlosen Rohrstranges gewonnen werden können.

Aus der JP-A-61148035 ist ein Verfahren zur Herstellung eines Leitungsrohres aus Kunststoff nach dem Oberbegriff des Anspruches 1 bekannt. Bei dem Doppelwandrohr haben Innenrohr und Außenrohr überall identische Wandstärke, d.h. sowohl in den gewellten als auch in den glattzylindrischen Bereichen. Das Doppelwandrohr ist nur für Verbindung mit Doppelwandrohren der gleichen Art bestimmt. Eine Anpassung an Standardabmessungen von Steinzeugrohren ist nirgendwo beschrieben. Wenn der Innendurchmesser der Muffe bzw. der Außendurchmesser des Spitzendes an den Außendurchmesser des Spitzendes bzw. den Innendurchmesser der Muffe eines Steinzeugrohres angepaßt wären, wäre damit noch keine Anpassung an den Innendurchmesser des Steinzeugrohres gegeben. Bei einem Anschluß an Steinzeugrohre käme es infolgedessen innen zu einer Sprungstelle. Wenn man hingegen die gesamte Wandstärke von Innen- und Außenrohr so wählte, daß der Innenrohrdurchmesser dem Innendurchmesser von Steinzeugrohren entspräche, führte dies zu einer Über- oder Unterdimensionierung des Rohres im Bereich des Wellprofils, wo Innenrohr und Außenrohr dieselben Wandstärken wie an den Enden aufweisen.

Aus der DE-A-3 701 822 ist ein Verfahren zur Herstellen von Kunststoffrohren bekannt, bei dem die Nutzen während des Strangpressens erzeugt werden. Hierzu haben umlaufende Formbackenpaare Kokillen mit Hohlräumen, die der Form der Muffenteile entsprechen und wird das Material durch Anwenden eines Druckunterschiedes in die Hohlräume gepreßt. Die Wand des fertigen Muffenteils soll gewöhnlich dünner als die Wand des Rohrteils sein, weil der den Muffenteil bildende Hohlraum sich weiter entfernt von dem Dorn befindet, als die übrige Formfläche der Kokille. Bei gerippten Rohren soll das Ausbleiben der Rippen am Muffenteil diese Verdünnung jedoch einigermaßen kompensieren. Für den Fall, daß gewünscht wird, die Wanddicke des Muffenteils mit der des Rohrteils identisch zu halten, wird vorgeschlagen, daß die Kokillen mit einer kleineren Geschwindigkeit als normal vorwärtsgeführt werden, während die Teile des Schlauches ausgeformt werden, die sich am Hohlraum befinden.

Davon ausgehend liegt der Erfindung die Aufgabe zugrunde, ein Herstellungsverfahren für ein Leitungsrohr aus Kunststoff zu schaffen, das sich sowohl mit einem gleichen Leitungsrohr und ohne Übergangsstücke und sprungstellenfrei als auch mit einem Steinzeugrohr verbinden läßt.

Gelöst wird die Aufgabe durch ein Verfahren, das die Merkmale des Anspruches 1 aufweist.

Erfindungsgemäß erfolgt die Herstellung eines Leitungsrohres mit Hilfe zweier konzentrisch zueinander angeordneter Extrudervorrichtungen, die das innere und äußere Rohr separat bilden. Die Rohre werden z.B. im Bereich der wellentäler durch Wärmeverschweißen miteinander verrunden. Zur Herstellung des äußeren Rohres wird ein an sich bekannter Abzug mit umlaufenden Formbackenpaaren eingesetzt. Mindestens eines der Formbackenpaare weist ein glattes Formprofil auf, während die übrigen Backenpaare gewellte Profile besitzen. Je nach Anzahl bzw. Länge der eingesetzten Formbackenpaare mit glattem Profil lassen sich so Rohrstränge herstellen, die alternierend gewellte und glattzylindrische Abschnitte gewünschter Länge aufweisen. In der Regel wird der geweilte Abschnitt in den meisten Anwendungsfällen deutlich länger ausgebildet als der glatte Rohrabschnitt.

Die Besonderheit des erfindungsgemäßen Verfahrens besteht darin, daß die Extrudiergeschwindigkeit für das äußere Rohr immer dann reduziert wird, wenn die Formbacken mit glattem Profil zum Einsatz kommen. Dies ist notwendig, um die Wanddicke des glatten Rohrabschnitts so einzustellen, daß Innen- und Außendurchmesser in diesem Abschnitt den Standardabmessungen entsprechen. Wie oben ausgeführt, liegt die Wanddicke des Rohres in seinem glatten Bereich derart deutlich über der Summe der Dicken von Innen- und Außenrohr im Bereich eines Wellentales, daß der Außendurchmesser des glattzylindrischen Endbereichs dem Innendurchmesser der Muffe eines Steinzeugrohres entspricht.

Wie bereits erwähnt, erhält man bei dem oben beschriebenen Verfahren einen Endlosrohrstrang, bei dem gewellte und glatte Abschnitte regelmäßig alternieren. Wird der Rohrstrang im Bereich des mittleren Drittels der glatten Abschnitte geteilt, so erhält man Rohrabschnitte, die beidendig einen glattzylindrischen Endabschnitt aufweisen. Das Verfahren sieht in diesem Zusammenhang vor, daß der glatte Abschnitt des Rohrstranges so lang ausgebildet wird, daß die nach Teilung des Stranges gebildeten, glatten Endabschnitte gleichermaßen zur Bildung einer Muffe durch Aufweitung und zur Bildung des genormten Endabschnittes geeignet sind. Dies läßt sich z.B. durch Anordnung einer entsprechenden Anzahl von Formbackenpaaren mit glattem profil in der umlaufenden Kette des Abzuges bewerkstelligen.

Das Verfahren liefert ein Leitungsrohr, das in einem Endbereich an einer Muffe aufgeweitet ist. Der Innendurchmesser der Muffe kann Standardmaß haben. Das Leitungsrohr eignet sich für alle in Kanalgrundleitungen verwendeten Nennweiten, insbesondere für Nennweiten über 200 mm. Die Steifigkeit des Rohres wird naturgemäß über die Ausgestaltung des Außenrohres eingestellt. Hohe Rohrsteifigkeiten, wie sie z.B. erforderlich sind, wenn das Rohr unter Wasser oder in großer Tiefe verlegt werden soll, bedingen eine Wellung mit hohen Bergen bzw. tiefen Tälern. Dies führt zu einem größeren Außendurchmesser des Außenrohres. Bei niedrigen Steifigkeiten verhält es sich umgekehrt. Das Rohr besitzt in dem glattzylindrischen Bereich eine Wanddicke, die größer als die des Innenrohres in dem übrigen Bereich (dem Bereich, in dem das Außenrohr gewellt ausgebildet ist), wobei die Wanddicke derart deutlich größer als die Summe der Dicken des Innen- und des Außenrohres im Bereich eines Wellentales im übrigen Bereich ist, daß der Außendurchmesser des glattzylindrischen Endbereichs dem Innendurchmesser der Muffe eines Steinzeugrohres entspricht. Es versteht sich, daß das Rohr während der Herstellung auch an beiden Enden mit jeweils einem derartigen glattzylindrischen Abschnitt versehen werden kann, von denen der eine zu einer normierten Muffe aufgeweitet wird und der andere einen, in die Muffe des erfindungsgemäßen oder sonstigen standardisierten Rohres einsetzbaren, Endabschnitt bildet.

Bevorzugt ist der Außendurchmesser des Außenrohres in dem übrigen, nicht zur Muffe aufgeweiteten Rohrbereich mindestens so groß, wie der herkömmlicher, standardisierter Rohre, wobei der Außendurchmesser am anderen Ende den Außendurchmessern standardisierter Rohre entspricht. Hierdurch ist eine Verbindung mit anderen Leitungsrohren möglich, die eine Muffe mit standardisiertem Innendurchmesser haben bzw. mit Standardrohren. Zu dem gleichen Zweck kann auch der Außendurchmesser des Außenrohres dem standardisierter Rohre entsprechen.

Die Erfindung soll im folgenden anhand von Abbildungen näher erläutert werden.

Dabei zeigt
- Fig. 1: einen Längsschnitt durch die Wand eines Rohrstranges mit alternierend gewellten und glatten Abschnitten,
- Fig. 2: den Strangabschnitt aus Fig. 1 nach Teilung und Aufweitung des dadurch entstandenen einen glatten Endbereiches zu einer Muffe,
- Fig. 3: ein Verbindungsstück, das auf den gewellten Rohrbereich aufgesetzt ist,
- Fig. 4: einen Schnitt durch ein Leitungsrohr, das von einem weiteren glatten Rohr umgeben ist.

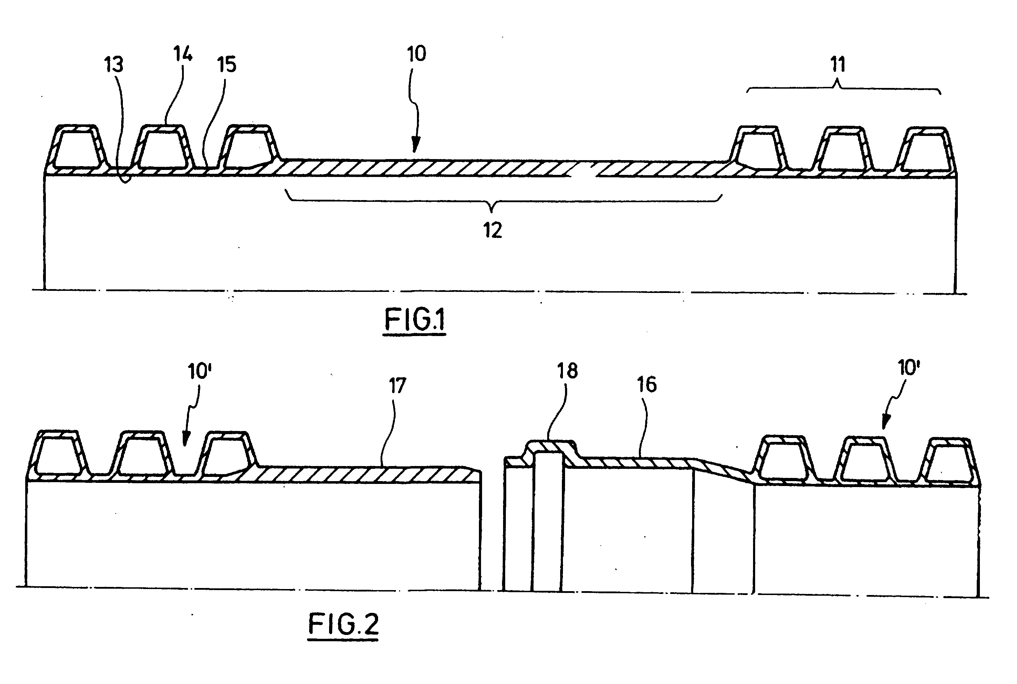

Fig. 1 zeigt einen Ausschnitt aus einem Endlosrohrstrang 10, der alternierend gewellte 11 und glattzylindrische 12 Abschnitte enthält. Der Rohrstrang 10 besteht aus einem inneren glatten Rohrstrang 13 und einem äußeren Rohrstrang 14, der in dem Strangbereich 11 gewellt ist. Im Bereich 12 ist er wie der innere Rohrstrang 13 glattzylindrisch ausgebildet und mit diesem zu einem Rohrabschnitt integriert. Man erkennt weiterhin, daß die Wanddicke im Bereich 12 des Stranges 10 deutlich größer ist als die eines Wellentales 15 (in dem innerer und äußerer Rohrstrang aufeinanderliegen) im Bereich 11. Dieser Unterschied in den Dicken soll lediglich beispielhaft dokumentieren, daß sich die Wanddicke im glattzylindrischen Bereich (aus dem, wie später ausgeführt, die Endbereiche der einzelnen Rohre gebildet werden) passend einregulieren läßt, um einen Abschnitt mit standardisiertem Innen- und Außendurchmesser zu ergeben.

Teilt man den in Fig. 1 gezeigten Rohrstrang 10 im Bereich 12, so erhält man Rohre 10', die im Bereich ihrer Enden einen glattzylindrischen Abschnitt aufweisen. Dieser Abschnitt kann zu einer Muffe 16 aufgeweitet werden, oder einen genormten in die Muffe einsetzbaren Endabschnitt 17 bilden, wie in Fig. 2 gezeigt. In der Muffe 16 ist weiterhin eine umlaufende nach außen weisende Ausbuchtung 18 vorgesehen, in der ein nicht gezeigter Dichtungsring angeordnet werden kann.

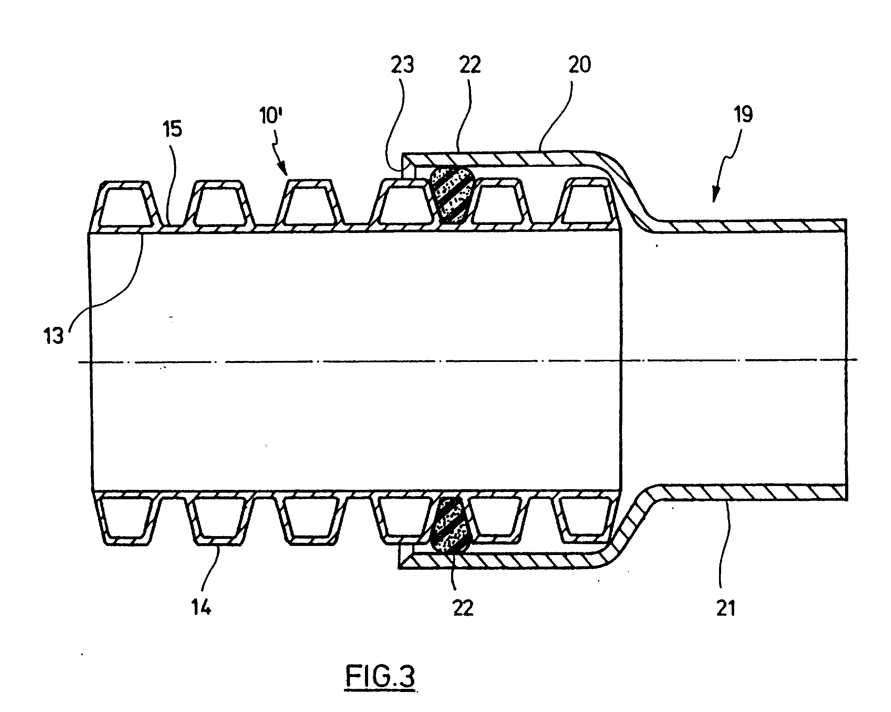

Fig. 3 zeigt nun den Fall, daß der eine Endbereich des Leitungsrohres 10' gewellt ist und damit einen Außendurchmesser aufweist, der über dem Innendurchmesser üblicher Muffen liegt. Dazu kann es z.B. kommen, wenn ein Rohr im Rahmen der Verlegung abgelängt werden muß. Um ein derartiges Rohrende mit standardisierten Rohrmuffen zu verbinden, wird ein Verbindungsstück 19 eingesetzt, das zwei untereinander verbundene rohrförmige Abschnitte mit unterschiedlichen Durchmessern aufweist. Der eine Abschnitt 20 ist dabei an die Abmessungen des gewellten Rohres angepaßt, die Abmessungen des anderen Abschnittes 21 sind so gewählt, daß er ohne Veränderung der Nennweite in eine übliche Muffe einer herkömmlichen Standardverzweigung einsetzbar ist. In Fig. 3 erkennt man weiterhin, daß in dem Verbindungsbereich des Verbindungsstückes 19 mit dem Rohr 10' in einem Wellental ein umlaufender Dichtungsring 22 angeordnet ist, der einen Flüssigkeitsaustritt verhindern soll. Weiterhin weist das freie Ende des Bereiches 20 des Verbindungsstückes 19 eine nach innen konvergierende Abschrägung 23 auf, die ein Aufstecken auf das Rohr 10' erleichtern soll.

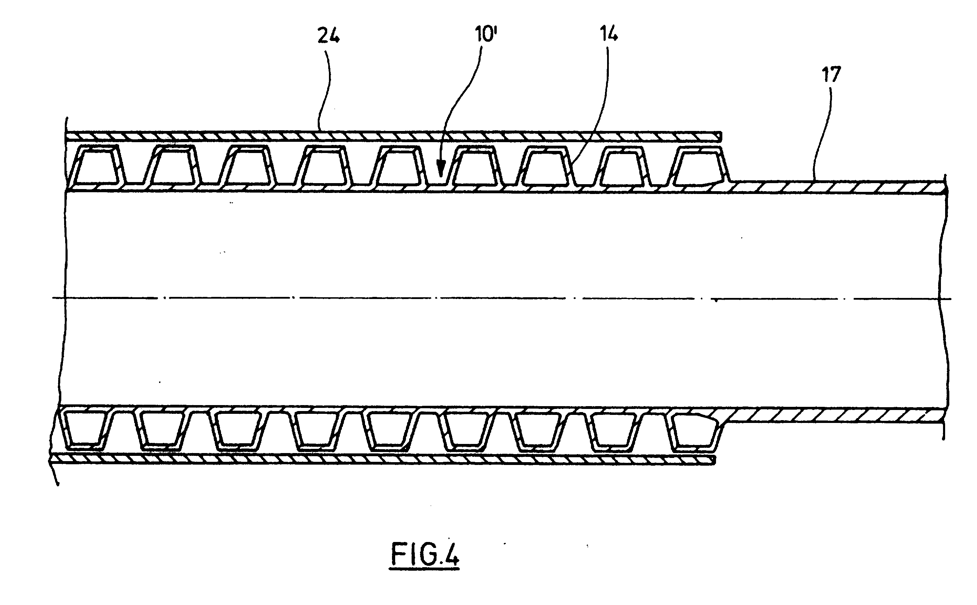

Fig. 4 zeigt ein Leitungsrohr, bei dem das Verbundrohr 10' mit einem weiteren, glatten Rohr 24 umgeben ist, das z.B. durch gleichzeitige Extrusion aufgebracht ist. Eine Verbindung der Rohre 24 und 10' kann im Bereich der Wellenberge durch z.B. Wärmeverschweißen erfolgen. Man erkennt, daß sich das Rohr 24 nicht über den glattzylindrischen Bereich 17 des Rohres 10' erstreckt, sondern am letzten Wellenberg endet. Zu diesem Zweck wird bei der Extrusion das äußere Rohr durch geeignete Werkzeuge abgeschnitten. Das Außenrohr 24 gibt dem Verbundrohr eine glatte Außenhaut, die z.B. das Einstecken in Schächte erleichtert.

Als Materialien zur Herstellung des Rohres und des Verbindungsstückes können PVC oder PET verwendet werden. Aus Gewichts- und Materialersparnisgründen ist es vorzuziehen, wenn die Wellenberge hohl sind, wie im Schnitt in Fig. 1 und 2 erkennbar ist. Für bestimmte Anwendungsfälle können die Wellenberge jedoch auch massiv ausgebildet werden.

Es versteht sich, daß die Muffen in bekannter Weise Dichtungsringe oder dergleichen enthalten, um die gewünschte Dichtigkeit im Leitungszuge zu erhalten.

## Patentansprüche

1. Verfahren zur Herstellung eines über Muffenverbindungen mit einem gleichen oder einem anderen Rohr verbindbaren Leitungsrohres aus Kunststoff, insbesondere für Abwässer, bei dem ein glattes Innenrohr (13) und ein damit verbundenes gewelltes Außenrohr (14) koextrudiert werden, wobei das innere und das äußere Rohr mit konzentrisch zueinander ausgerichteten Extrudiervorrichtungen hergestellt und dann miteinander durch Wärmeverschweißen verbunden werden und die Extrudiervorrichtungen für das äußere Rohr umlaufende Formbackenpaare mit gewelltem Formprofil sind, wobei die Extrudiervorrichtungen mindestens ein umlaufendes Formbackenpaar mit glattem Formprofil zur Herstellung eines glattzylindrischen Rohrabschnittes (12) aufweisen, mittels der Extrudiervorrichtungen ein Endlosrohrstrang mit gewellten (11) und glattzylindrischen Abschnitten (12) hergestellt und dieser im Bereich der glattzylindrischen Abschnitte geteilt wird, nach dem Zerteilen des Rohrstranges im glattzylindrischen Abschnitt (12) der glattzylindrische Endbereich eines Rohrteiles zu einer im wesentlichen glattzylindrischen Muffe (16) aufgeweitet wird, die Anzahl bzw. Ausdehnung der umlaufenden Formbacken mit glattem Profil so gewählt ist, daß in Strangrichtung gesehen ein ausreichend langer glattzylindrischer Abschnitt (12) gebildet wird, um nach Zerteilen des Stranges in diesem Abschnitt an dem einen Rohrteil den glattzylindrischen Endbereich (17) und an dem anderen Rohrteil nach Aufweitung eine im wesentlichen glattzylindrische Muffe (16) zu ergeben, dadurch gekennzeichnet, daß die Extrudiergeschwindigkeit während der Formung mit den Formbacken glatten Profils zur Herstellung eines glattzylindrischen Rohrabschnittes (12) derart deutlich größerer Wanddicke als die Summe der Wanddicken von glattem Innenrohr (13) und gewelltem Außenrohr (14) im Bereich eines Wellentales verringert wird, daß sein Außendurchmesser dem Innendurchmesser der Muffe eines Steinzeugrohres entspricht.

2. Verfahren nach Anspruch 1, dadurch gekennzeichnet, daß als Rohrmaterialien PVC oder PET verwendet werden.

## Claims

1. A method of manufacturing a line pipe of plastic material to be connected to a line pipe of the same or a different type through socket means, in particular a sewer pipe, wherein a smooth inner pipe (13) and a corrugated outer pipe (14) connected thereto are coextruded, the inner and outer pipe are produced by extruding means concentrically oriented with respect to each other and then are connected to each other by heat welding, and the extruding means for the outer pipe are rotating pairs of forming dies of a corrugated forming profile, the extruding means comprise at least one rotating pair of forming dies of a smooth cylindrical forming profile for producing a smooth cylindrical pipe section (12), an endless pipe having corrugated (11) and smooth cylindrical (12) sections are produced by means of said extruding means and are separated in the area of the smooth cylindrical sections, the smooth cylindrical end area of a pipe member, after the endless pipe has been separated in the smooth cylindrical section (12), is expanded to form a substantially smooth cylindrical socket (16), the number or, respectively, extension of the rotating forming dies of a smooth profile are selected such that a sufficiently long smooth cylindrical section (12), as viewed in the pipe direction, is formed, which section after having been separated yields the smooth cylindrical end area (17) at one pipe member and a substantially smooth cylindrical socket (16) at the other pipe member after the expanding process, characterized in that the extruding speed is reduced during the forming process by the forming dies of a smooth profile for producing a smooth cylindrical pipe section (12) of a wall thickness substantially exceeding the sum of the wall thicknesses of said smooth inner pipe (13) and said corrugated outer pipe (14) in the area of a depression of the corrugations such that its outer diameter will be similar to the inner diameter of the socket of a stonewear pipe.

2. The method of claim 1 characterized in that PVC or PET are used as pipe materials.

## Revendications

1. Procédé de fabrication d'un tube de conduite en plastique pouvant être raccordé à un tube semblable ou différent par l'intermédiaire d'un raccord par manchon, notamment pour des eaux usées, selon lequel un tube intérieur (13) lisse et un tube extérieur (14) ondulé qui y est lié sont coextrudés, le tube intérieur et le tube extérieur étant fabriqués avec des dispositifs d'extrusion disposés concentriquement l'un par rapport à l'autre et étant ensuite raccordés l'un à l'autre par soudure thermique, et les dispositifs d'extrusion pour le tube extérieur sont des paires rotatives de mâchoires de formage et ayant un profil de formage ondulé, les dispositifs d'extrusion comportant au moins une paire rotative de mâchoires de formage ayant un profil de formage lisse pour la fabrication d'une section de tube (12) cylindrique lisse, tandis qu'au moyen des dispositifs d'extrusion on fabrique une longueur continue de tube avec des sections ondulées (11) et des sections cylindriques lisses (12), et on tronçonne cette longueur dans la région des sections cylindriques lisses, et après tronçonnage de la longueur de tube dans la section (12) cylindrique lisse, on élargit la partie d'extrémité cylindrique lisse d'un tronçon de tube en un manchon (16) essentiellement cylindrique lisse, le nombre ou l'étendue des mâchoires de formage périphérique à profil lisse étant choisi de telle sorte qu'on constitue une section (12) cylindrique lisse suffisamment longue suivant le sens de la longueur du tube, pour produire, après le tronçonnage de la longueur de tube dans cette section, une partie d'extrémité (17) cylindrique lisse sur l'un des tronçons de tube, et après élargissement, un manchon (16) essentiellement cylindrique lisse sur l'autre tronçon de tube, caractérisé en ce qu'on diminue la vitesse d'extrusion pendant le formage avec les mâchoires de formage à profil lisse pour la fabrication d'une section de tube cylindrique lisse (12) à épaisseur de paroi nettement plus grande que la somme des épaisseurs de paroi du tube intérieur lisse (13) et du tube extérieur ondulé (14) dans la zone d'un creux d'onde, de telle manière que son diamètre extérieur corresponde au diamètre intérieur d'un manchon de tuyau en grès.

2. Procédé suivant la revendication 1, caractérisé en ce que du PVC ou du PET est utilisé comme matériau de tube.
